# EUROPEAN PATENT SPECIFICATION

(11) **EP 2 481 228 B1**
(45) Date of publication and mention of the grant of the patent: **15.04.2015**
(21) Application number: 11724950.8
(22) Date of filing: 10.05.2011
(51) Int. Cl.: H04W 8/30, H04W 24/04, H04W 68/00

(54) **METHOD FOR HANDLING FAILURE OF A MME IN AN EVOLVED PACKET SYSTEM**
VERFAHREN ZUM UMGANG MIT MME-AUSFÄLLEN IN EINEM EPS
PROCÉDÉ PERMETTANT DE TRAITER UNE DÉFAILLANCE D'UNE ENTITÉ DE GESTION DE LA MOBILITÉ (MME) DANS UN RÉSEAU EPS

(30) Priority: 11.05.2010 EP 10004972
(43) Date of publication of application: 01.08.2012
(73) Proprietor: NEC Europe Ltd., 69115 Heidelberg (DE)
(72) Inventor: TALEB, Tarik, 69126 Heidelberg (DE); PUNZ, Gottfried, 69221 Dossenheim (DE); SCHMID, Stefan, 69118 Heidelberg (DE)
(74) Representative: Patent- und Rechtsanwälte Ullrich & Naumann
(86) International application number: PCT/EP2011/002312
(87) International publication number: WO 2011/141154

(56) References cited:
- EP-A1- 1 583 388
- WO-A1-2009/120127
- "3rd Generation Partnership Project; Technical Specification Group Core Network and Terminals; Study of EPC Nodes Restoration; (Release 10)", 3GPP STANDARD; 3GPP TR 23.857, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.2.0, 7 March 2011 (2011-03-07), pages 1-31, XP050476278, [retrieved on 2011-03-07]
- NOKIA SIEMENS NETWORKS: "Detecting an EPC node failure without restart", 3GPP DRAFT; C4-111049_PCR_23857_PATH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Tallinn; 20110509, 29 April 2011 (2011-04-29), XP050484851, [retrieved on 2011-04-29]
- NEC: "Pro-active solution for MME restoration", 3GPP DRAFT; C4-101742, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Dublin; 20100629, 18 June 2010 (2010-06-18), XP050446963, [retrieved on 2010-06-18]
- "3rd Generation Partnership Project; Technical Specification Group Core Network and Terminals; Study on PCRF failure and restoration (Release 9)", 3GPP STANDARD; 3GPP TR 29.816, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V2.0.0, 22 September 2010 (2010-09-22) , pages 1-63, XP050442175, [retrieved on 2010-09-22]
- CATT: "The discussion of Multi-TA registration concept", 3GPP DRAFT; R3-061853, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Riga, Latvia; 20061103, 3 November 2006 (2006-11-03), XP050160734, [retrieved on 2006-11-03]
- "3rd Generation Partnership Project; Technical Specification Group Core Network and Terminals; Restoration procedures (Release 9)", 3GPP STANDARD; 3GPP TS 23.007, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.0, 6 April 2010 (2010-04-06), pages 1-39, XP050402405, [retrieved on 2010-04-06]

## Description

The present invention relates to a method for handling failure of a MME (Mobility Management Entity) in an EPS (Evolved Packet System) by performing pro-active MME restoration, wherein at pro-active MME restoration, MME relocation and restoration of the lost state is triggered, as soon as failure of the MME is detected, wherein multiple UEs (User Equipment) are attached to a first MME, wherein said first MME stores first context information representing the UEs attached to said first MME, wherein said UEs are connected to one of multiple eNBs (evolved NodeB) via a radio link, wherein said eNBs may communicate with said first MME and with at least one neighboring MME, and wherein said UEs may communicate with said first MME and with said at least one neighboring MME via said eNB.

At 3GPP's LTE/EPC wireless communication standard, the MME (Mobility Management Entity) is the key control node for the access network. The MME handles important procedures, such as idle mode UE (User Equipment) tracking and paging, and interacts with other core network entities at other important procedures like user authentication or bearer activation/deactivation. A MME may handle up to a few million UEs at the same time. In LTE/EPC networks, there are generally two or more MMEs.

During normal operation, each UE (active or in idle mode) is attached to a MME. Each MME stores context information which represents the attached UEs and their respective connections. The UEs may communicate with the MME via an eNB (evolved eNodeB) and vice versa. The communication between a UE and an eNB generally is performed via a radio link. An eNB is connected to the MME and other core network entities via an IP (Internet Protocol) based wired link.

As the MME is a central network entity, a MME failure handling scenario is defined in 3GPP standards. Relevant standards are:
[1] 3GPP TS 24.301 Non-Access-Stratum (NAS) protocol for Evolved Packet System (EPS);
[2] 3GPP TS 23.402 Architecture enhancements for non-3GPP accesses;
[3] 3GPP TS 23.007 Restoration Procedures;
[4] 3GPP TS 23.401 General Packet Radio Service (GPRS) enhancements for Evolved Universal Terrestrial Radio Access Network (E-UTRAN) access;
[5] 3GPP TS 24.302 Access to the 3GPP Evolved Packet Core (EPC) via non-3GPP access networks.

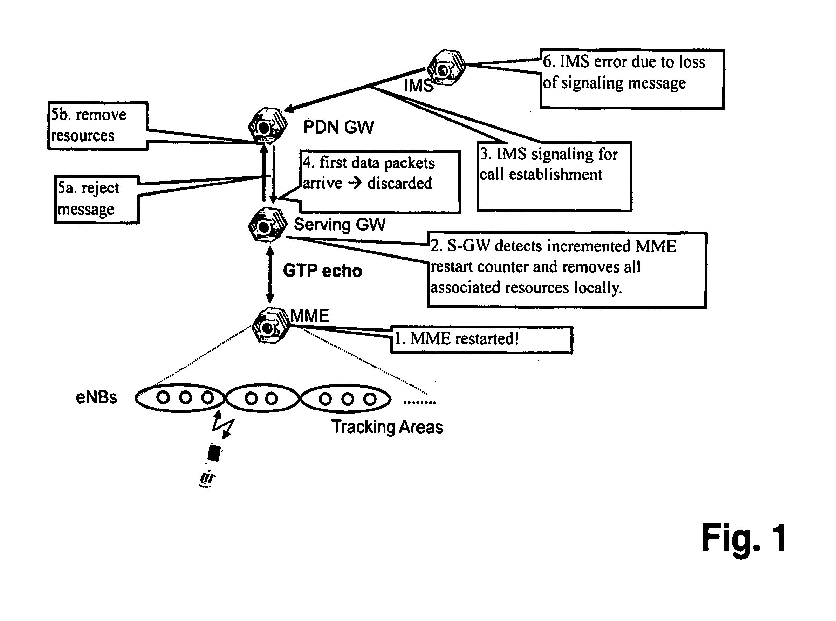

The MME failure scenario within the procedures defined in the 3GPP standards is depicted in Fig. 1. The diagram of Fig. 1 refers to standards valid at the priority date of the present application. Fig. 1 relates to the example of a terminating IMS (IP Multimedia Subsystem) call arriving after MME failure. At MME failure, the MME looses context information for the attached UEs.

At step 1, the MME restarts after failure. After the restart of the MME, the S-GW (Serving Gateway) detects the restart of the MME by incremented MME restart counter in a GTP (GPRS Tunneling Protocol) echo message (step 2). The S-GW removes all resources related to UEs handled previously on this MME. The removal of resources is not propagated directly up to the PDN-GW (Packet Data Network Gateway), i.e. the allocated IP (Internet Protocol) address and a S5/S8 (interface of the LTE/EPC network) tunnel configuration in PDN-GW remains valid.

At step 3, IMS signaling for call establishment arrives at the PDN-GW. Data packets (stemming from step 3) arrive at the S-GW and are discarded, due to unknown information e.g. GTP TEID (Tunnel Endpoint Identifier) or equivalent (step 4). The S-GW sends a reject message to the PDN-GW (step 5a) and the PDN-GW, upon receiving it, removes all resources linked to the relevant IP address (step 5b). The loss of the SIP (Session Initiation Protocol) signaling messages leads to an error situation in IMS (step 6). By performing these steps, invalid configurations are removed and the next IMS call will establish a new connection.

In February/March 2011, the restoration procedures were enhanced with optional capabilities. Now the S-GW does not necessarily remove all resources. At an IMS call, a core network internal repair process is initiated.

It is a drawback of the known failure handling that the restoration procedure has a significant impact on the delay of a call request. At the previous version of the standards, the first call request will be discarded. The call has to be initiated anew which is time-consuming and leads to a bad user experience. At the current version of the standard, the call request is generally successful but may be delayed significantly, as restoration of context information has to be performed.

WO 2009/120127 A1 discloses a method and a communication network node in a communication network system. The communication network system comprises several radio base stations which have at least three communication interfaces. A first communication interface is used for communication with at least one communication network entity. A second communication interface is used for communication with other radio base station. A third interface is a radio interface which enables communication with a user equipment. When one user equipment is to be handed over to a newly detected radio base station before the relation between the detected radio base station and an existing radio base station serving the user equipment is established, the handover message is initially transmitted over the first communication interface. Although WO 2009/120127 A1 describes a similar network setup as used at the present invention and although it also states the objective of UEs to recover from a MME failure, the document does not describe how this objective can be achieved.

EP 1 583 388 A1 discloses a method and a system which might handle failure of a SGSN (serving GPRS support node). A radio network controller (RNC) is connected to a first SGSN and to a second SGSN and keeps track of the SGSN status as well as of the UEs and their associated SGSN. If the RNC detects failure or congestion of the first SGSN to which a UE#1 is registered, RNC forwards a signal for packet switched service received from UE#1 to the second SGSN (instead of the first SGSN which should actually receive the signal). If the second SGSN detects that UE#1 has not performed a location registration to the second SGSN, it instructs the UE#1 to perform a location registration or regards the signal as a location registration request. This means that the RNC keeps track of the connections and that a new location registration process is initiated, when a SGSN failure is detected. [3] discloses restoration procedures in the MME, as well as GTP-C based restart procedures.

Late published document 3GPP C4-101742 discloses a pro-active solution for MME restoration in which eNBs perform bulk paging in order to restore UEs context data on other alternative MMEs, rather than restoring on the failed MME.

It is therefore an object of the present invention to improve and further develop a method of the initially described type for handling MME failure in a LTE/EPC network in such a way that the impact on UEs (active or in idle mode) can be reduced.

In accordance with the invention, the aforementioned object is accomplished by a method comprising the features of claim 1.

According to the invention it has first been recognized that the major drawback of the above-mentioned conventional solution results from the reactive approach, as it awaits the restart of the failed MME. According to the invention a pro-active approach is used. As soon as a failure of the MME is detected, MME relocation and restoration of the lost state is triggered in order to avoid service disruption at a later stage.

The present invention assumes that the LTE network comprises at least two MMEs. As this is true at most LTE networks, this assumption is no real restriction. Without loss of generality, the failing MME is subsequently called "first MME" and one or more neighboring MMEs will replace the first MME at its failure. Neighboring MMEs are MME(s) of the same service area and/or service pool. The context information stored at the first MME is subsequently called first context information. It should be understood that the first MME is not a specific MME within the LTE network. The "first MME" can be any failing or failed MME. It should be further understood that failure can be each state of "out of service". For example failure can result from hardware breakdown, software hangs or planned maintenance. Further failure situations are possible and will become apparent to somebody skilled in the art.

According to the invention the health state of a MME is monitored, directly or indirectly. When a failure of the MME is detected, gathering of information related to UEs attached to the first MME is triggered. This information might include each data which can be used for restoration of the context information of the UEs. In a next step at least parts of the first context information are restored at one or several of said neighboring MME using the gathered information. Network internal logical connections with said one or several of said neighboring MME are re-established using the restored context information. MME relocation for the affected UEs may take place.

According to a preferred embodiment of the invention the step of detecting failure may be performed by network entities which are involved in the communication path of a UE. Such a network entity can be the eNB to which the UE is currently linked. The network entity can also consist of the S-GW at which the UE currently runs an ongoing communication. However, also other eNBs and S-GW which are communicatively linked with a MME can monitor the state of the MME. Also a neighboring MME might be a network entity which monitors the state of a MME. Most LTE/EPC networks also comprise an O&M (Operation and Maintenance) system. This system can also be a monitoring network entity according to this embodiment.

Detection of failure may be based on feedbacks from a supervising entity, based on periodic keep-alive/echo messages and their responses, based on explicit signaling, or based on the results of analysis of network entities. A great variety of information which already exist in the network may be used.

According to another preferred embodiment of the invention the step of gathering information includes sending an additional signaling message to a S-GW (Serving Gateway) at which a UE is currently registered. This additional signaling message may comprise a UE context update request or an Update assess bearer request. Preferably, the additional signaling message is sent on top of existing interfaces. This embodiment can be used at active mode UEs, i.e. at UEs with ongoing communication. S-GWs are controlled by a MME. With the failure of the MME, the control entity is lost. However, the S-GW may handle ongoing connections without MME. The S-GW stores context information which can be used at a new MME. Information retrieved from the S-SGW may be used for recovering UE's S1 bearer information. Using this embodiment of the invention, MME relocation may take place without impacting the user plane.

When using additional signaling message, the additional signaling messages may be transmitted for a set of active mode UEs. The set of UEs can be formed by UEs with common factors, like having same S-GW or to experience imminent handoffs. The set of UEs may be identified by a set identifier, e.g. a connection set ID. Preferably, the identifier is a unique identifier.

According to another preferred embodiment of the invention the step of gathering information includes sending paging signaling to eNBs and/or idle mode UEs which are affected by the failure of said first MME. This embodiment might be used particularly in connection with idle mode UEs. Paging signaling may be generated by a neighboring MME. The paging signaling will be received by the addressed eNBs which might forward the paging signaling to the UEs which have a radio link to the eNB. The paging signaling might also be generated by the eNB itself. The paging signaling generated by an eNB might also be transmitted to other eNBs which might be affected by the MME failure.

Preferably the paging signaling includes information regarding the failed first MME. Using this information, a UE or an eNB can evaluate whether a UE is affected by the failure of the MME.

Advantageously, paging signaling comprises bulk paging signaling, i.e. paging signaling which is addressed to multiple UEs and/or multiple eNBs. Using bulk paging reduces the traffic significantly, as not each single UE and/or eNB has to be addressed separately by paging signaling.

Paging may be initiated by one of the neighboring MMEs or by the eNB which detects failure of said first MME. If a neighboring MME sends paging signaling, it may notify other neighboring MMEs of the event in order to avoid duplicate paging. If duplicate paging occurs, the UE or the eNB may handle the first paging signaling and may discard the duplicates. Further a filter might eliminate duplicate paging.

In order to avoid overload of the system, paging signaling and/or responses to said paging signaling may be spread over time and/or may be performed per specific groups of UEs and/or eNBs. This may include that paging signaling is only sent to eNBs within a certain area (e.g. a tracking area) or that UEs with a certain priority metric are addressed. Further ways of grouping are possible. Alternatively or additionally, paging signaling or the response to the paging might be sent with a certain delay. This delay might be randomized.

For further reducing network traffic resulting from restoration, responses of the single UEs to paging signaling may be aggregated by the eNBs and may be sent as aggregated responses to the respective MMEs. The responses from different UEs which comprise one or some common aggregation criteria and which are received within a predefined time limit might be aggregated. Examples for suitable aggregation criteria might be a common new MME or same services. Aggregation will combine several responses to one response which contains the information of the single responses. With aggregation of the responses, the number of responses which have to be transmitted can be reduced considerably.

Additionally or alternatively responses received from the eNBs at a MME may be aggregated and may be sent as aggregated response to the HSS (Home Subscriber Server). This may reduce the number of responses even further. The aggregation at the MME may aggregate "normal" responses and/or aggregated responses.

After the step of re-establishing network internal connections, a UE may be re-attached to one of the neighboring MMEs according to the re-established logical connections. Re-attachment of said UE may be triggered by the paging signaling received from the eNB. For this reason, a special re-attachment flag may be added to the paging signaling. However, re-attachment of a UE may also be initiated by a service request message from the UE. This service request will fail and result in a TAU (Tracking Area Update). This indirect way of re-attachment uses methods which are commonly used in LTE/EPC networks. As the core network internal connections are already established, this re-attachment can be performed rather quickly.

In connection with the method according to the invention, a load balancing scheme may be executed. This may avoid overload of the network or parts of the network. The load balancing scheme can be performed particularly at selecting a new MME which handles the UEs affected by the failure of the MME.

In summary, the method according to the invention pro-actively re-establishes connections which were present before the MME failed. The duration of failure has no impact on the method. As soon as failure is detected, restoration and relocation is initiated. In the MME selection for UEs affected by the failed MME, load balancing operation might be executed in order to redistribute and re-attach the affected UEs based on the load at the respective MMEs.

For better understanding of the invention some key features are given with respect to a preferred embodiment:
1. A solution to guarantee service continuity in 3GPP networks (EPS, LTE/EPC networks, etc.) in case of MME failure through pro-active resilience mechanisms across nodes in the radio access and core networks is provided.
2. MME failure detection is performed by O&M, eNBs using S1-MME, by neighboring MMEs using S10, or directly by S-GWs using S11.
3. A set of eNBs is triggered to perform bulk paging of idle mode UEs affected by a MME failure. The failed MME information is used as identifier in the page message and information relevant for overload avoidance (e.g. randomization data).
4. A set of MMEs triggers bulk paging of idle mode UEs affected by a MME failure, indicating the failed MME and providing indicators for overload avoidance.
5. A MME that first detects the failure of its neighbor immediately starts the bulk paging and notifies the neighboring MMEs (e.g. all MMEs of the same service area / pool) of the event in order to avoid duplicate paging.
6. Upon detecting the failure of a MME, O&M notifies the neighboring MMEs and indicates to each MME which TA (Tracking Area) and/or which group of UEs to page, also to avoid duplicate paging.
7. eNBs filter out all duplicate paging messages for the same UE.
8. Overload of particular MMEs/eNBs is avoided via scheduled paging of UEs and/or scheduled responses from UEs based on randomization over a defined time interval.
9. Overload of particular MMEs/eNBs is avoided via prioritized paging of UEs and/or responses from UEs based on different metrics (e.g., access class, subscription, UE's unique IDs).
10. eNBs hold back the TAU Requests and/or MMEs hold back Update Location Requests and/or Create/Update Service Requests in order to aggregate these requests and minimize the signaling load on the network/relevant interfaces and processing load at the receiving end (i.e. the MME for the TAU Requests, the HSS for the Update Location Requests, and the S/P-GWs for the Create/Update Service Requests).
11. Following a MME failure and for each affected active mode UEs, eNBs trigger a selected MME to recover UE's S1 bearer information (from S-GWs and other network elements) using additional signaling messages (e.g., UE context update request, Update access bearer request) on top of existing interfaces. MME relocation takes place here without impacting the user plane.
12. Recovering UEs' S1 bearer information can be done for a set of active mode UEs with common factors (e.g., having same S-GW or to experience imminent handoffs) and identified by a unique identifier (e.g., connection set ID)

The key concept behind the devised solutions according to the present invention is to pro-actively trigger MME relocation and restoration of lost state to avoid service disruption at a later stage. In particular, the innovation comprises the following cases:
- *For idle mode UEs:* Trigger all affected idle-mode UEs through "scheduled bulk paging" to re-attach to the network.
- *For active mode UEs:* Allow ongoing communications to proceed and trigger UEs in a scheduled manner (e.g. high priority UEs first) to perform a Tracking Area Update.

Both mechanisms lead to the selection of a new MME for the UE and restoration of its context in a pro-active manner.

A number of supporting mechanisms are also considered. These mechanisms are related to:
*i)* MME failure detection
*ii)* Bulk Paging of all affected UEs in idle mode
   a. MME-initiated paging (on S1AP (S1 interface, Application Part) and RRC (Radio Resource Control))
   b. eNB-initiated paging (on RRC, using PCCH (Paging Control Channel) channels or BCCH (Broadcast Channel) channels)
*iii)* Overload avoidance
   a. scheduling paging and responses at MMEs, eNBs, UEs, or at a combination of the three to cope with the limited capacities of MMEs (e.g., maximum number of TAU requests to be processed per second)
   b. Batch TA Update procedure
*iv)* eNB-initiated MME restoration for affected UEs in active mode.

The proposed solution scheme is characterized by these features:
1. Early and thus pro-active MME restoration (i.e., support of immediate service initiation, no need to wait till the restart of the failed MME nor for the next UE triggered action,);
2. Bulk paging of all affected UEs on the radio interface and/or S1-AP interface (based on the MME information as identifier in the paging message) whilst taking into account load balancing and overload avoidance;
3. Maintenance of ongoing connections for ECM-connected UEs even after failure of the corresponding MME (i.e., no service disruption).

### Detection of a MME failure can be achieved

- Via an explicit intervention/notification from O&M
   o O&M detects failure *i*) based on feedback from supervising SW daemons on the MMEs, *ii*) based on periodic keep-alive/echo messages and responses, *iii*) having MME immediately send an alarm to O&M right before it crashes - very possible in case of partial failure, or *iv*) by analyzing related information (e.g., handover occurrences) from other network elements such as eNBs, S-GWs, P-GWs, etc.
- directly by eNBs using S1-MME (i.e., using keep-alive messages of SCTP protocol as in RFC 4960),
- directly by neighboring MMEs using S10 protocol means (e.g., using echo messages of GTP-C, or having MME immediately send an alarm to one or more neighboring MME right before it crashes. The latter informs the other MMEs, etc), or
- directly by S-GWs using S11 protocol means (e.g., using echo messages of GTP-C, providing related information to O&M for analysis).

The proposed solution scheme is characterized by these features:
1. Early and thus pro-active MME restoration (i.e., support of immediate service initiation, no need to wait till the restart of the failed MME nor for the next UE triggered action);
2. Bulk paging of all affected UEs on the radio interface and/or S1-AP interface (based on the MME information as identifier in the paging message) whilst taking into account load balancing and overload avoidance;
3. Maintenance of ongoing connections for ECM-connected UEs even after failure of the corresponding MME (i.e., no service disruption).

The method according to the present invention presents a proactive solution to deal with MME restoration. For example, the proposed methods can be integrated into eNBs, MME, O & M, UEs.

There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will be explained. In the drawing:
- Fig. 1: is a diagram illustrating the MME failure scenario as known in the art (defined in 3GPP standards),
- Fig. 2: is a diagram illustrating a first embodiment of the invention using eNB-initiated paging,
- Fig. 3: is a diagram illustrating a second embodiment of the invention using MME-initiated paging,
- Fig. 4: is a signal flowchart illustrating idle mode signaling for re-distributing UEs to operative MMEs after MME failure, and
- Fig. 5: is a signal flowchart illustrating a third embodiment of the invention with eNB-initiated MME restoration for UEs which are affected by MME failure and which are in connected mode.

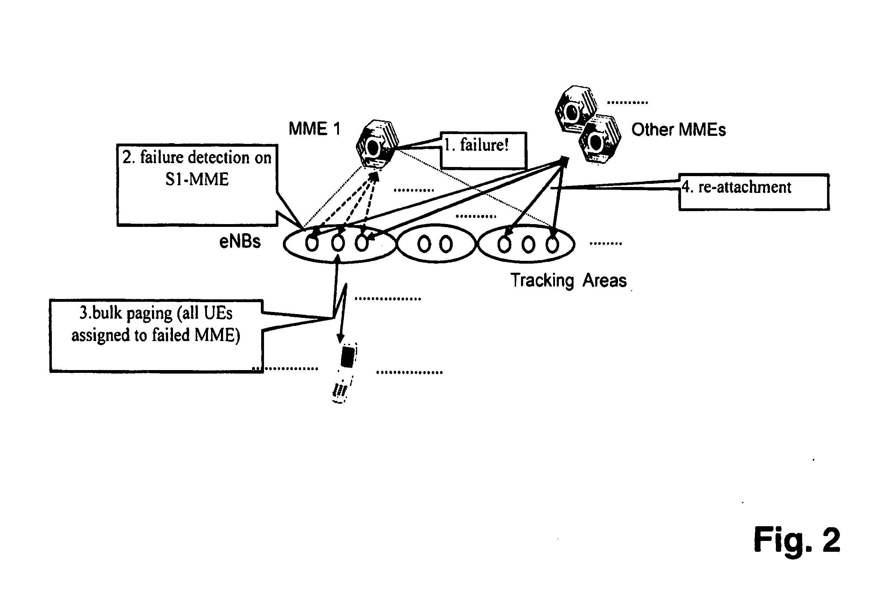

Fig. 2 shows a first embodiment of the invention with eNB-initiated paging (on L2 radio channels) for affected UEs in idle mode. The proposed procedure is based on an enhancement in the paging procedure that enables paging of all UE's that have been served by a particular MME (i.e. the "bulk" paging is characterized by the use of MME information - which is the leading part of GUTI - as identifier).

The steps in detail are:
1. MME 1 has failed;
2. All eNBs with S1-MME connection to MME 1 detect the failure;
3. All eNBs detecting the MME failure initiate bulk paging of all idle mode UEs being served by the failing MME, with identity of the failed MME and some indicators for overload avoidance (e.g., randomization time interval)
4. During the re-attachment the eNBs re-distribute the UEs on the MMEs remaining in operation.

The service request procedure initiated by the UE as response to the paging will lead indirectly to a re-attach, in the following sequence:
1. The UE sends the SERVICE REQUEST message to the eNB;
2. Due to the failure of the originally assigned MME, the eNB needs to re-distribute the UE to another MME by releasing the RRC connection, using the cause "*loadBalancingTAURequired*"*;*
3. The UE will re-establish the RRC connection and subsequently perform a TAU;
4. The (new) MME will respond with cause #9 ("UE identity cannot be derived"); this leads the UE into EMM-DEREGISTERED, from where it can re-attach.

Such a mechanism would in principle trigger many UEs to re-attach at the same time, but the re-attach attempts should be spread out over time to avoid overload at the newly selected MMEs; this can be achieved by different mechanisms explained in the section "Overload Avoidance".

Alternatively to the above-mentioned Service Request-based procedure, the UE may also re-attach to the network after receiving a paging message as a result of an MME failure (i.e., indicated via a flag in the paging message) and that is following the attach procedure as described in clause 5.3.2 of [4].

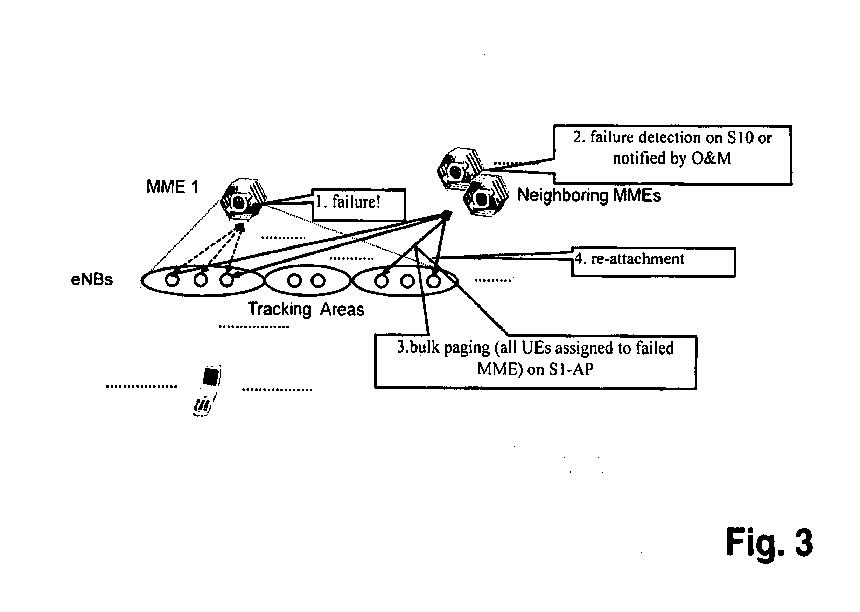

Fig. 3 relates to a second embodiment of the invention with MME-initiated paging (on S1-AP interface) for affected UEs in idle mode. In this embodiment, MME failure is detected by neighboring MMEs and paging of UEs is initiated by MMEs that are in the neighborhood of the affected MME - e.g. another MME in the same service area ("pool"). Here, a MME A is said to be a neighbor of MME B if both MMEs have at least one common Tracking Area. As schematically depicted in Fig. 3, the steps of this solution are as follows:
1. MME 1 has failed;
2. One or more neighboring MMEs or S-GW detect the failure (e.g. based on GTP echo messages);
3. The neighboring MMEs detecting the MME failure initiate bulk paging on S1-AP (addressing idle mode UEs), with identity of the failed MME and some indicators for overload avoidance (e.g., randomization time interval), to trigger corresponding UEs to re-attach to the network (e.g., indicating "load balancing TAU required" as in clause 5.3.5 of 23.401);
4. UEs re-attach to the network.

In this solution, duplicate paging shall be minimized, if not entirely avoided. This can be achieved via different methods: 1.) In case a neighbor MME detects the MME failure, it immediately starts the paging and notifies its neighboring MMEs that it has already paged the concerned UEs and there is no need to do that from their side. This mechanism assumes that MMEs have prior knowledge on the pool of MMEs that are able to cover a failing MME. 2.) In case O&M detects the MME failure and notifies the neighboring MMEs, O&M can explicitly indicate to each MME which Tracking Area it should page. 3.) The eNBs filter out duplicated paging messages (stemming from different MMEs) to a single UE.

In case of an inevitable reception of duplicate paging, a UE simply considers the first paging message and discards the following ones.

For the sake of load balancing, the concerned eNBs run a MME Load Balancing scheme (excluding the failed MME) to ensure that not all UEs would connect to the same MME (e.g., following clause 4.3.7.3 of 23.401).

For the sake of overload avoidance in addition to the MME related load balancing scheme (excluding the failed MME) by eNBs, we propose the following mechanisms that shall contribute to overload avoidance in general (i.e. also on eNBs):

Bulk paging at MMEs or eNBs can be performed per specific groups of UEs, based on certain priority metrics (e.g., access class), or in a randomized manner using a predefined randomization time.

Responses from UEs can be carried out in a randomized manner and over a time interval following a hash function that takes UEs' unique identifiers (e.g., IMSI, S-TMSI, etc), subscription information available at UE, etc) as input values (based on new UE functionality).

The two above-mentioned mechanisms can be jointly carried out.

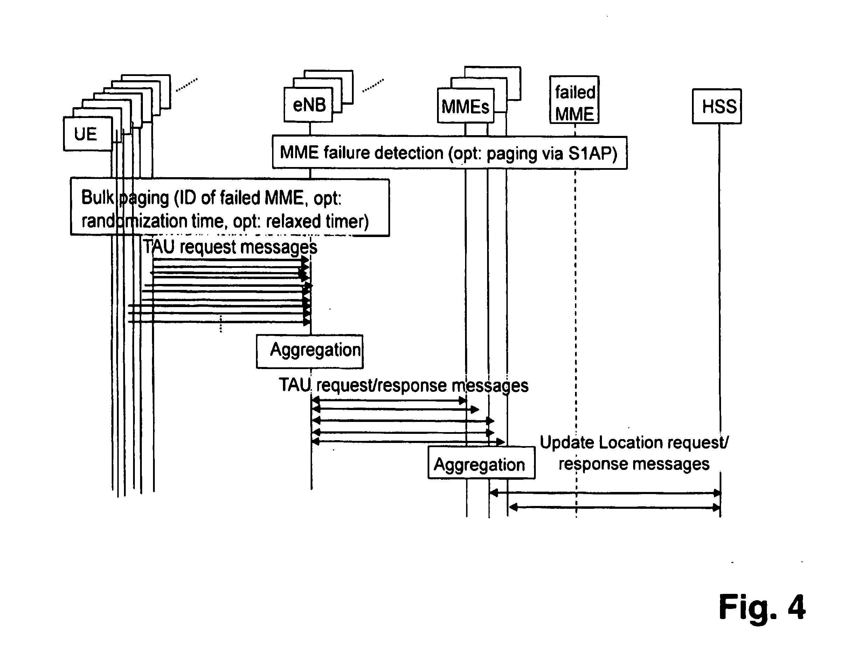

Fig. 4 relates to idle mode signaling for re-distributing UEs to operative MMEs after MME failure. Given constraints in the maximum number of Tracking Area Updates an MME can handle per second, we propose that in case of MME restoration, eNB can also hold back the TAU Requests and/or MME holds back TAU requests and location update requests towards the HSS in order to aggregate several location updates towards the HSS and/or Create/Update Service requests to the S/P-GWs (see Fig. 4). For example, the MME waits for a predefined timeout or till a number of TAU requests arrive (or both) to proceed with a bulk of Location Updates towards the HSS. Usually, for a TAU request, a UE sets up a timeout (i.e., 15s as in [5]) within which TAU accept message should be received. Whilst 15s is sufficiently long, should it be required, this timeout could be increased in case of TAU following specific events such as MME failure.

In the following, Update Location Request messages are used as an example to explain the gain that the network may make out of the above-mentioned bulk signaling handling. As defined in TS 29.272, section 5.2.1.1, these are the relevant information elements in Update Location request message (M...Mandatory, O...Optional, C...Conditional):
IMSI (M),
Supported Features (O),
Terminal Information (O),
ULR Flags (M),
Visited PLMN Id M (M),
RAT Type (M),

Only IMSI and Terminal Information will differ between the many requests to be handled; this means that the message contents can be compacted considerably. Moreover, the effort of parsing the parameters of many messages is also reduced to a minimum, which shall reduce by a large factor the time spent for restoration.

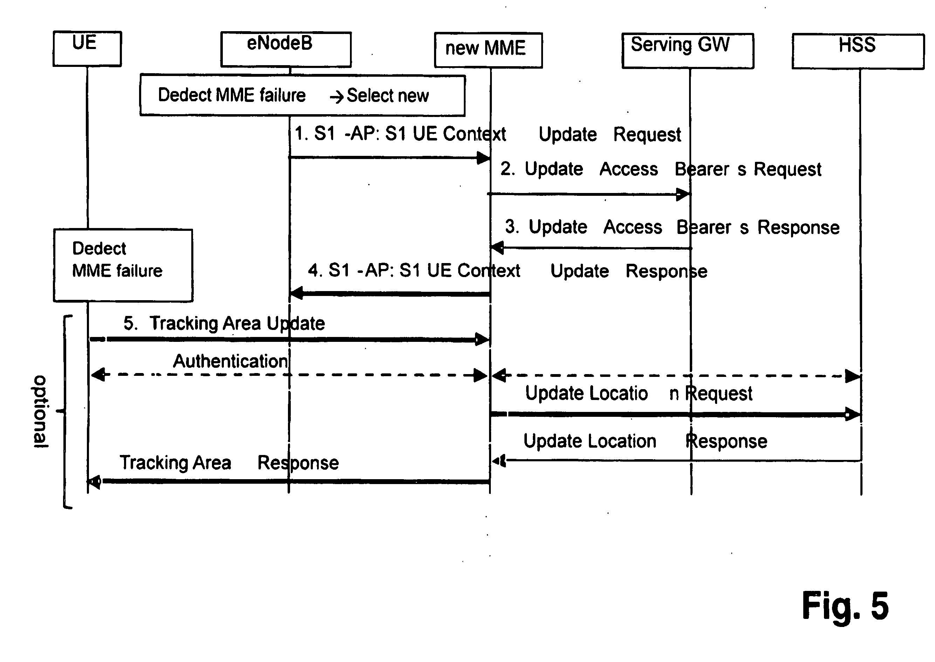

Fig. 5 relates to a third embodiment of the invention with eNB-initiated MME restoration for UEs which are affected by MME failure and which are in connected mode. Regarding UEs in Connected mode and which are affected by a MME failure, the objective is to get their contextual information (previously available at the failed MME) which is distributed over different network entities (e.g., S-GW, P-GW, eNB, etc) without impacting the ongoing sessions of the UEs. The state of the art solution is to duplicate/mirror all information in highly resilient nodes/data base implementations of MMEs. So whenever a MME fails, the UE contextual information can be recovered instantaneously from these mirrors. However, this comes at high costs. Additionally, in order to cater for large disasters (e.g. earthquakes), this solution would have additionally to be enhanced with geographical distribution. In contrast, the solution described here is based on more intelligent, cooperative behavior of network elements, which allows a considerably simpler and thus cheaper MME implementation.

In particular, a newly selected MME (after failure of the serving MME) will recover the state information for the eNB (step 1) and Serving GW (step 3). The state information recovered by the new MME from the Serving GW (in step 3) include per UE bearer information such as:
- IMSI;
- ME Identity;
- MSISDN;
- S-GW TEID for S11/S4 (control plane);
- S-GW IP address for S11/S4 (control plane);
- Last known Cell Id;
- Last known Cell Id age;
- APN in Use;
- EPS PDN Charging Characterisitcs;
- P-GW Address in Use (control plane);
- P-GW TEID for S5/S8 (control plane);
- P-GW Address in Use (user plane);
- P-GW GRE Key for uplink traffic (user plane);
- S-GW IP address for S5/S8 (control plane);
- S-GW TEID for S5/S8 (control plane);
- S-GW Address in Use (user plane);
- S-GW GRE Key for downlink traffic (user plane);
- Default Bearer;
- TFT;
- S-GW IP address for S1-u, S12 and S4 (user plane);
- S-GW TEID for S1-u, S12 and S4 (user plane);
- eNodeB IP address for S1-u;
- eNodeB TEID for S1-u;
- RNC IP address for S12;
- RNC TEID for S12;
- SGSN IP address for S4 (user plane);
- SGSN TEID for S4 (user plane);
- EPS Bearer QoS;
- Charging Id.

The state information recovered by the new MME from the eNB (in step 1) include per UE:
- Selected Network;
- EPS Bearers information (TEID and address of the eNodeB);
- AMBR.

Since per UE and EPS bearer information must be exchanged for many UEs, the information exchange between eNB / S-GW and MME (steps 1-4) can also be achieved by means of bulk signaling (i.e. per UE and EPS bearer information can be aggregated in a single signaling exchange).

The flowchart of the proposed solution is shown in Fig. 5. The mechanism is applied by each eNB being in a tracking area that was serviced by the failed MME. It concerns only UEs in connected mode that have been registering with the failed MME. Note that an eNB can easily sort out these UEs. The steps of this solution are as follows:
0. eNB detects MME failure and selects a new one out of the remaining MMEs in operation. Load balancing is taken into account in the selection of a new MME. MME selection can be done for an individual active UE or for a set of active UEs with common factors (e.g., having assigned the same S-GW, those to experience imminent handoffs) and defined by a unique identifier (e.g., Connection Set ID according to [3]) allocated locally. Prioritization among the UEs or the formed sets of UEs can be envisioned, i.e., intuitively UEs with imminent handoffs should be prioritized over other UEs.
1. eNB sends UE's S1 bearer information to the selected MME requesting a UE context update. Some of the provided context could be UE's IMSI, corresponding S-GW, Reason for Update (i.e., failure of MME X), etc. A bulk of update requests can be also performed for each formed set of UEs (as mentioned in the previous step).
2. MME then sends an Update Access Bearers request to the corresponding S-GW querying UE's S1 bearer information. MME, in turn, can also group UEs into different groups, uniquely and locally identified, and send a bulk of update bearer requests for each formed group of UEs.
3. In response, S-GW sends an Update Access Bearer Response. Here, the information on the corresponding P-GW can be also included.
4. As confirmation, the newly selected MME responds with a S1 UE context update response to the eNB.
5. When UE detects MME failure (e.g., based on error message following an attempt to initiate a new PDN connection using old GUTI) or is triggered to perform TAU (e.g., by eNB via a RRC connect signaling message), it sends a tracking area update. MME relocation will then take place without impacting the user plane.

It should be noted that while in the above described flow, the TAU request is handled for each individual UE in connected mode, the same bulk signaling handling described in Fig. 4 could be applied.

Many modifications and other embodiments of the invention set forth herein will come to the mind of the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for handling failure of a MME - Mobility Management Entity - in an EPS - Evolved Packet System - by performing pro-active MME restoration, wherein at pro-active MME restoration, MME relocation and restoration of the lost state is triggered, as soon as failure of said MME is detected,
wherein multiple UEs - User Equipment - are attached to a first MME, wherein said first MME stores first context information representing the UEs attached to said first MME,
wherein said UEs are connected to one of multiple eNBs - evolved NodeB, wherein said eNB may communicate with said first MME and with at least two neighboring MMEs, and wherein said UEs may communicate with said first MME and with said at least two neighboring MMEs via said eNB,
**characterized by** the steps of
detecting failure of said first MME,
sending bulk paging signaling to idle mode UEs which are affected by the failure of said first MME, thus gathering information about said idle mode UEs, wherein said bulk paging signaling refers to paging signaling which is addressed to multiple idle mode UEs, wherein failed MME information is used as identifier in the paging message, wherein the step of sending bulk paging is triggered by the detection of said failure,
restoring at least parts of said first context information at one or several of said neighboring MME using the gathered information, and
re-establishing network internal logical connections with said one or several of said neighboring MME using the restored first context information,
wherein bulk paging is initiated by one of the neighboring MMEs that detects the failure of the first MME or by the eNB which detects failure of said first MME and
wherein a neighboring MME which sends bulk paging signaling may notify other neighboring MMEs of the detected failure in order to avoid duplicate paging.

2. Method according to claim 1, wherein the step of detecting failure is performed by an eNB, by one of said neighboring MME using S10, by an S-GW-Serving GateWay - or by an O&M system - Operation and Maintainance system.

3. Method according to claim 1 or 2, wherein the step of detecting failure is based on feedbacks from a supervising entity, based on periodic keep-alive/echo messages and their responses, based on explicit signaling, or based on the results of analysis of network entities.

4. Method according to any of claims 1 to 3, additionally comprising sending an additional signaling message to a S-GW - Serving GateWay - at which a UE is currently registered, wherein said additional signaling message preferably comprises a UE context update request or a Update assess bearer request.

5. Method according to claim 4, wherein said additional signaling messages are transmitted for a set of active mode UEs, wherein the UEs within one set of UEs comprise common factors, i.e. having same S-GW or to experience imminent handoffs, and wherein the UEs within one set of UEs are preferably identified by a set identifier.

6. Method according to Claim 2 and 5, wherein said O&M notifies the neighboring MMEs and indicates to each MME which tracking area and/or which group of UEs to page in order to avoid duplicate paging.

7. Method according to any of claims 1 to 6, wherein paging signaling and/or responses to said paging signaling are spread over time and/or are performed per specific groups of UEs and/or eNBs.

8. Method according to any of claims 1 to 7, wherein responses of the single UEs to said paging signaling are aggregated by the eNBs and are sent as aggregated responses to the respective MMEs.

9. Method according to any of claims 1 to 8, wherein responses received from the eNBs at a MME are aggregated and are sent as aggregated response to the HSS (Home Subscriber Server).

10. Method according to any of claims 1 to 9, wherein after said step of re-establishing network internal connections, a UE is re-attached to one of the neighboring MMEs according to the re-established logical connections.

11. Method according to claim 10, wherein re-attachment of said UE is triggered by said paging signaling received from said eNB

12. Method according to claim 10, wherein re-attachment of said UE is initiated by a service request message from said UE, wherein failure of said service request results in a TAU - Tracking Area Update.

13. Method according to any of claims 1 to 12, wherein a load balancing scheme is executed in order to avoid overload of the network or parts of the network.

## Patentansprüche

1. Verfahren zum Umgang mit einem Ausfall eines MME - Mobility Management Entity - in einem EPS - Evolved Packed System - durch proaktive MME-Wiederherstellung, wobei bei einer proaktiven MME-Wiederherstellung eine MME-Verschiebung und eine Wiederherstellung des verlorengegangenen Zustands ausgelöst wird, sobald ein Ausfall des MMEs detektiert wird,
wobei mehrere UEs - User Equipment - mit einem ersten MME verbunden sind,
wobei das erste MME erste Kontextinformationen speichert, die die mit dem ersten MME verbundenen UEs repräsentieren,
wobei die UEs mit einem von mehreren eNBs - evolved NodeB - verbunden sind, wobei der eNB mit dem ersten MME und mit mindestens zwei benachbarten MMEs kommunizieren kann und wobei die UEs mit dem ersten MME und den mindestens zwei benachbarten MMEs über das eNB kommunizieren kann, **gekennzeichnet durch** die Schritte
Detektieren eines Ausfalls des ersten MMEs,
Senden von Massen-Paging-Signalisierung an UEs im Ruhezustand, die von dem Ausfall des ersten MMEs betroffen sind, wodurch Informationen über die UEs im Ruhezustand gesammelt werden, wobei sich die Massen-Paging-Signalisierung auf Paging-Signalisierung bezieht, die an mehrere UEs im Ruhezustand gerichtet ist, wobei Informationen zu dem ausgefallenen MME als Kennung in der Paging-Nachrichten verwendet wird, wobei der Schritt des Sendens von Paging-Signalisierung **durch** das Detektieren des Ausfalls ausgelöst wird,
Wiederherstellen von zumindest Teilen der ersten Kontextinformationen bei einem oder mehreren der benachbarten MMEs unter Verwendung der gesammelten Informationen und
Neuaufbauen netzwerkinterner logischer Verbindungen mit einem oder mehreren der benachbarten MMEs unter Verwendung der wiederhergestellten ersten Kontextinformationen,
wobei das Massen-Paging **durch** einen der benachbarten MMEs, der den Ausfall des ersten MME detektiert, oder **durch** den eNB, der den Ausfall des ersten MMEs detektiert, eingeleitet wird und
wobei ein benachbartes MME, das Massen-Paging-Signalisierung sendet, andere benachbarte MMEs von dem detektierten Ausfall unterrichten kann, um doppeltes Paging zu vermeiden.

2. Verfahren nach Anspruch 1, wobei der Schritt des Detektierens eines Ausfalls durch einen eNB, durch einen der benachbarten MMEs unter Verwendung des S10, durch einen S-GW - Serving GateWay - oder durch ein O&M-System - Operation and Maintainance System - durchgeführt wird.

3. Verfahren nach Anspruch 1 oder 2, wobei der Schritt des Detektierens eines Ausfalls auf Rückmeldungen von einer Überwachungseinheit, auf periodische Keep-alive-/Echo-Nachrichten und ihre Antworten, auf explizites Signalisieren oder auf Ergebnisse einer Auswertung von Netzwerkeinheiten basiert wird.

4. Verfahren nach einem der Ansprüche 1 bis 3, zusätzlich umfassend das Senden einer zusätzlichen Signalisierungsnachricht an einen S-GW - Serving GateWay, bei dem ein UE aktuell registriert ist, wobei die zusätzliche Signalisierungsnachricht vorzugsweise eine UE-Kontextaktualisierungsanfrage oder eine Zugriffsträgeraktualisierungsanfrage umfasst.

5. Verfahren nach Anspruch 4, wobei die zusätzlichen Signalisierungsnachrichten für einen Gruppe von UEs im aktiven Betriebszustand übermittelt werden, wobei die UEs innerhalb einer Gruppe von UEs gemeinsame Faktoren umfassen, d.h. das gleiche S-GW aufweisen oder anstehende Übergaben ("HandofFs") erfahren, und wobei die UEs innerhalb einer Gruppe von UEs vorzugsweise durch eine Gruppenkennung identifiziert sind.

6. Verfahren nach Anspruch 2 und 5, wobei das O&M die benachbarten MMEs unterrichtet und jedem MME zeigt, in welches Verfolgungsgebiet ("Tracking Area") und/oder an welche Gruppe von UEs Paging zu senden ist, um doppeltes Paging zu vermeiden.

7. Verfahren nach einem der Ansprüche 1 bis 6, wobei Paging-Signalisierung und/oder Antworten auf die Paging-Signalisierung über die Zeit verteilt werden und/ oder für bestimmte Gruppen von UEs und/oder eNBs durchgeführt werden.

8. Verfahren nach einem der Ansprüche 1 bis 7, wobei Antworten der einzelnen UEs auf die Paging-Signalisierung durch die eNBs aggregiert werden und als aggregierte Antworten an die jeweiligen MMEs gesendet werden.

9. Verfahren nach einem der Ansprüche 1 bis 8, wobei die bei einem MME von den eNBs empfangenen Antworten aggregiert werden und als aggregierte Antworten an den HSS - Home Subscriber Server - gesendet werden.

10. Verfahren nach einem der Ansprüche 1 bis 9, wobei ein UE nach dem Schritt des Neuaufbauens netzwerkinterner Verbindungen mit einem der benachbarten MMEs entsprechend den neuaufgebauten logischen Verbindungen wiederverbunden ist.

11. Verfahren nach Anspruch 10, wobei das Wiederverbinden des UEs durch die von dem eNB empfangene Paging-Signalisierung ausgelöst wird.

12. Verfahren nach Anspruch 10, wobei das Wiederverbinden des UEs durch eine Dienstanfragenachricht von dem UE eingeleitet wird, wobei ein Fehlschlagen der Dienstanfrage in einem TAU - Tracking Area Update - resultiert.

13. Verfahren nach einem der Ansprüche 1 bis 12, wobei ein Lastenverteilungsschema ausgeführt wird, um Überlastung des Netzwerks oder Teilen des Netzwerks zu vermeiden.

## Revendications

1. Procédé de gestion de la défaillance d'une entité MME, « entité de gestion de la mobilité », dans un système EPS, « système en mode paquet évolué », par la mise en oeuvre d'une restauration d'entité MME proactive, dans lequel, au cours de la restauration d'entité MME proactive, une relocalisation d'entité MME et une restauration de l'état perdu sont déclenchées, dès que la défaillance de ladite entité MME est détectée ;
dans lequel de multiples équipements UE, « équipements d'utilisateur », sont rattachés à une première entité MME ;
dans lequel ladite première entité MME stocke des premières informations de contexte représentant les équipements UE rattachés à ladite première entité MME ;
dans lequel lesdits équipements UE sont connectés à l'une parmi de multiples stations « eNB », « station "NodeB" évoluée », dans lequel ladite station « eNB » peut communiquer avec ladite première entité MME et avec au moins deux entités MME voisines, et dans lequel lesdits équipements UE peuvent communiquer avec ladite première entité MME et avec lesdites au moins deux entités MME voisines, par le biais de ladite station « eNB » ; **caractérisé par** les étapes ci-dessous consistant à :
détecter une défaillance de ladite première entité MME ;
envoyer une signalisation de radiomessagerie en bloc à des équipements UE en mode de repos qui sont affectés par la défaillance de ladite première entité MME, ce qui permet de recueillir par conséquent des informations connexes auxdits équipements UE en mode de repos, dans lequel ladite signalisation de radiomessagerie en bloc fait référence à une signalisation de radiomessagerie qui est adressée à de multiples équipements UE en mode de repos, dans lequel des informations d'entités MME défaillantes sont utilisées en qualité d'identifiant dans le message de radiomessagerie, dans lequel l'étape d'envoi de radiomessagerie en bloc est déclenchée par la détection de ladite défaillance ;
restaurer au moins des parties desdites premières informations de contexte au niveau d'une ou plusieurs desdites entités MME voisines, en utilisant les informations recueillies ; et
rétablir des connexions logiques internes du réseau avec ladite une ou lesdites plusieurs desdites entités MME voisines en utilisant les premières informations de contexte restaurées ;
dans lequel la radiomessagerie en bloc est initiée par l'une des entités MME voisines qui détecte la défaillance de la première entité MME ou par la station « eNB » qui détecte la défaillance de ladite première entité MME ; et
dans lequel une entité MME voisine qui envoie une signalisation de radiomessagerie en bloc peut notifier, à d'autres entités MME voisines, la défaillance détectée, afin d'éviter un doublon de radiomessagerie.

2. Procédé selon la revendication 1, dans lequel l'étape de détection de défaillance est mise en oeuvre par une station « eNB », par l'une desdites entités MME voisines utilisant la norme S10, par une passerelle S-GW, « passerelle de service », ou par un système O&M, « système d'exploitation et maintenance ».

3. Procédé selon la revendication 1 ou 2, dans lequel l'étape de détection de défaillance est basée sur des rétroactions en provenance d'une entité de supervision, est basée sur des messages d'écho / entretien périodiques et leurs réponses, est basée sur une signalisation explicite, ou est basée sur les résultats de l'analyse d'entités de réseau.

4. Procédé selon l'une quelconque des revendications 1 à 3, comprenant en outre l'envoi d'un message de signalisation supplémentaire à une passerelle S-GW, « passerelle de service », auprès de laquelle un équipement UE est enregistré à cet instant, dans lequel ledit message de signalisation supplémentaire comprend de préférence une demande de mise à jour de contexte d'équipement UE ou une demande de mise à jour de porteuse d'accès.

5. Procédé selon la revendication 4, dans lequel lesdits messages de signalisation supplémentaires sont transmis pour un ensemble d'équipements UE en mode actif, dans lequel les équipements UE au sein d'un ensemble d'équipements UE comprennent des facteurs communs, c'est-à-dire présentant la même passerelle S-GW, ou dans le cadre de la mise en oeuvre d'un transfert imminent, et dans lequel les équipements UE au sein d'un ensemble d'équipements UE sont de préférence identifiés par un identifiant défini.

6. Procédé selon les revendications 2 et 5, dans lequel ledit système O&M notifie, aux entités MME voisines, et indique à chaque entité MME, quelle zone de suivi et/ou quel groupe d'équipements UE doivent faire l'objet d'une radiomessagerie afin d'éviter un doublon de radiomessagerie.

7. Procédé selon l'une quelconque des revendications 1 à 6, dans lequel une signalisation de radiomessagerie et/ou des réponses à ladite signalisation de radiomessagerie sont étalées dans le temps et/ou sont mises en oeuvre pour des groupes spécifiques d'équipements UE et/ou de stations « eNB ».

8. Procédé selon l'une quelconque des revendications 1 à 7, dans lequel les réponses des équipements UE uniques à ladite signalisation de radiomessagerie sont agrégées par les stations « eNB » et sont envoyées sous la forme de réponses agrégées aux entités MME respectives.

9. Procédé selon l'une quelconque des revendications 1 à 8, dans lequel les réponses reçues en provenance des stations « eNB » au niveau d'une entité MME sont agrégées et sont envoyées sous la forme d'une réponse agrégée au serveur HSS (« serveur d'abonné résidentiel »).

10. Procédé selon l'une quelconque des revendications 1 à 9, dans lequel après ladite étape de rétablissement de connexions internes du réseau, un équipement UE est rattaché à l'une des entités MME voisines selon les connexions logiques rétablies.

11. Procédé selon la revendication 10, dans lequel le rattachement dudit équipement UE est déclenché par ladite signalisation de radiomessagerie reçue à partir de ladite station « eNB ».

12. Procédé selon la revendication 10, dans lequel le rattachement dudit équipement UE est initié par un message de demande de service en provenance dudit équipement UE, dans lequel une défaillance de ladite demande de service se traduit par une mise à jour TAU, « mise à jour de zone de suivi ».

13. Procédé selon l'une quelconque des revendications 1 à 12, dans lequel un schéma d'équilibrage de charge est exécuté en vue d'éviter une surcharge du réseau ou de parties du réseau.
